# EUROPEAN PATENT SPECIFICATION

(11) **EP 1 443 716 B1**
(45) Date of publication and mention of the grant of the patent: **02.05.2007**
(21) Application number: 03290252.0
(22) Date of filing: 03.02.2003
(51) Int. Cl.: H04L 12/56

(54) **Establishing diverse connections via different edge nodes**
Aufbau von Diversitäts-Verbindungen über unterschiedliche Zugangsknoten
Etablissement des connexions en diversité via des noeuds d'accès différents

(43) Date of publication of application: 04.08.2004
(73) Proprietor: Alcatel Lucent, 75008 Paris (FR)
(72) Inventor: Papadimitriou, Dimitri, 1190 Brussels (BE); Rousseau, Bart, 2260 Antwerp (BE)
(74) Representative: Narmon, Gisèle Marie Thérèse

(56) References cited:
- WO-A-01/86864
- US-A1- 2002 133 756
- US-A1- 2002 172 149
- ISELT A: "A new synchronization algorithm for hitless protection switching in ATM networks" PERFORMANCE, COMPUTING AND COMMUNICATIONS CONFERENCE, 1999 IEEE INTERNATIONAL SCOTTSDALE, AZ, USA 10-12 FEB. 1999, PISCATAWAY, NJ, USA,IEEE, US, 10 February 1999 (1999-02-10), pages 370-376, XP010323668 ISBN: 0-7803-5258-0
- VEITCH P A ET AL: "RESTORATION STRATEGIES FOR FUTURE NETWORKS" ELECTRONICS AND COMMUNICATION ENGINEERING JOURNAL, INSTITUTION OF ELECTRICAL ENGINEERS, LONDON, GB, vol. 7, no. 3, 1 June 1995 (1995-06-01), pages 97-103, XP000544975 ISSN: 0954-0695

## Description

The invention relates to a method as defined by the preamble of the claim 1.

Said serving network for example comprises a circuit-switched network or a packet-switched network, with said serving edge nodes being nodes situated at the edge of said serving network for connecting said serving network with a further network. Said diversities for example comprise link and/or shared risk link group and/or node diversities defining certain links or nodes needing to be different in both connections, to, inter alia, reduce risks and to reduce consequences from failures.

A prior art method is of common general knowledge to a person skilled in the art. In such a prior art method, said connection and said further connection from which said connection needs to be diverse both use the same serving edge node. In other words, said first and second serving edge nodes are the same edge node.

The known method is disadvantageous, inter alia, due to being limited to establishing diverse connections only via the same serving edge node.

It is an object of the invention, inter alia, of providing a method as defined above which is not limited to establishing diverse connections via the same serving edge node.

The method according to the invention is characterised by the characterising part of the new claim 1.

By firstly exchanging information between said different serving edge nodes and secondly in response to exchanged information setting up said connection, diverse connections via different serving edge nodes can now be established.

A first embodiment of the method according to the invention is defined by claim 2.

Said first serving edge node is coupled via a first client edge node to a client source node in a client network, and said second serving edge node is coupled via a second client edge node to said client source node in said client network, to create a dual-homed or more generally a multi-homed situation. In a dual-homed situation, a client edge node is coupled to two serving edge nodes, and in a multi-homed situation a client edge node is coupled to three or more serving edge nodes.

A second embodiment of the method according to the invention is defined by claim 3.

Said exchanged information comprises a request flowing from first serving edge node to second serving edge node to indicate that said connection to be established must be diverse from said further connection usually already established. Said connection parameters define connections in such a way that a certain diversity between two connections can be created by making certain connection parameters of both connections different from each other.

A third embodiment of the method according to the invention is defined by claim 4.

In case of said first serving edge node making the calculations for said connection to be established, said exchanged information will comprise, in addition to said request flowing from first serving edge node to second serving edge node, one or more further connection parameters defining at least a part of said further connection and flowing from second serving edge node to first serving edge node in response to said request. The result of said calculations define the path to be followed when setting up said connection.

A fourth embodiment of the method according to the invention is defined by claim 5.

In case of said second serving edge node making the calculations for said connection to be established, said exchanged information will comprise, in addition to said request, simultaneously or not, or as a a part of said request, one or more connection parameters defining at least a part of said connection to be established and also flowing from first serving edge node to second serving edge node. Said exchanged information will further comprise a result of said calculations flowing from second serving edge node to first serving edge node in response to said request. Again the result of said calculations define the path to be followed when setting up said connection.

A fifth embodiment of the method according to the invention is defined by claim 6.

Connection parameters may define any possible part of a connection, and diversity parameters may define any kind of diversity and any kind of non-diversity.

The invention is based upon an insight, inter alia, that, risks and consequences from failures can be further reduced by introducing diversities in connections using different serving edge nodes, and is based upon a basic idea, inter alia, that these different serving edge nodes need to exchange information before the diverse connection can be set up.

The invention solves the problem, inter alia, of providing a method which is not limited to establishing diverse connections via the same serving edge node, and is advantageous, inter alia, in that risks and consequences from failures are further reduced.

US 2002/172149 discloses in general a method and apparatus for protection path setup and discloses more in particular in its Figures 20 and 21 one and the same network being divided into different areas.

These and other aspects of the invention will be apparent from and elucidated with reference to the embodiments(s) described hereinafter.
Figure 1 illustrates in block diagram form a serving network comprising serving edge nodes according to the invention coupled to a client network comprising a client source node and client edge nodes according to the invention,
Figure 2 illustrates in block diagram form a serving edge node according to the invention, and
Figure 3 illustrates in block diagram form a client edge node according to the invention.

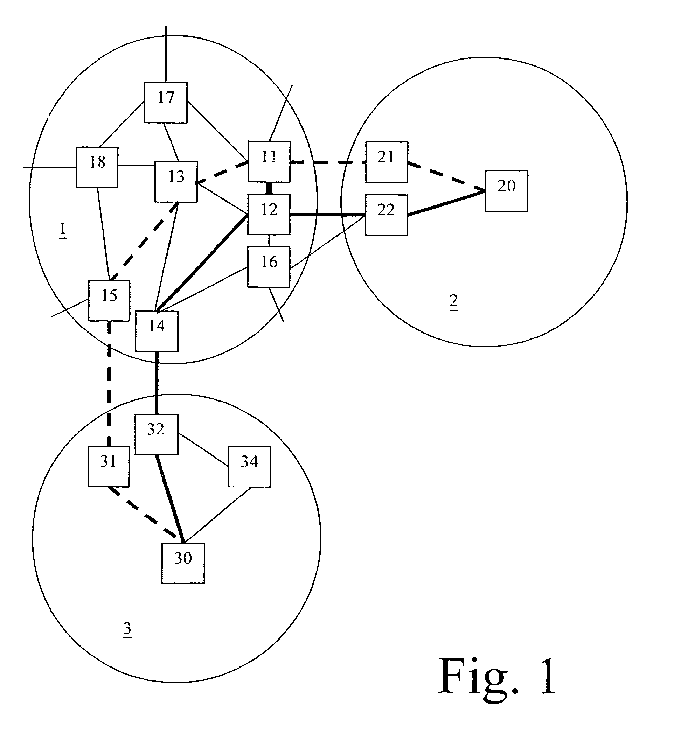

The serving network 1 shown in Figure 1 like for example a circuit-switched network or a packet-switched network comprises serving edge nodes 11, 12, 14, 15, 16, 17 and 18 and serving non-edge node 13, with serving edge node 11 being coupled to serving edge nodes 12 and 17 and to serving non-edge node 13, with serving edge node 12 being coupled to serving edge nodes 11, 14 and 16 and to serving non-edge node 13, with serving non-edge node 13 being coupled to serving edge nodes 11, 12, 14, 15, 17 and 18, with serving edge node 14 being coupled to serving edge nodes 12 and 16 and to serving non-edge node 13, with serving edge node 15 being coupled to serving edge node 18 and to serving non-edge node 13, with serving edge node 16 being coupled to serving edge nodes 12 and 14, with serving edge node 17 being coupled to serving edge nodes 11 and 18 and to serving non-edge node 13, and with serving edge node 18 being coupled to serving edge nodes 15 and 17 and to serving non-edge node 13. Serving edge node 11 is further coupled to client edge node 21, serving edge node 12 is further coupled to client edge node 22, with client edge nodes 21 and 22 being situated in client network 2 and being coupled to client source node 20. Serving edge node 14 is further coupled to client edge node 32, serving edge node 15 is further coupled to client edge node 31, with client edge nodes 31 and 32 being situated in client network 3 and being coupled to client destination node 30. Client network 3 further comprises a client non-edge node 34 coupled to client edge node 32 and to client destination node 30.

The method according to the invention functions as follows. A connection via first serving edge node 11 is to be established for a communication between source node 20 and destination node 30. This connection, indicated by the thick dotted line in Fig. 1, needs to be diverse from a further connection via second serving edge node 12 as indicated by the thick non-dotted line (for example comprising one or more existing tunneling connections in serving network 1). One or more diversity parameters define one or more diversities between said connection and said further connection. Thereto, source node 20 sends one or more connection parameters defining at least a part of said connection and said diversity parameters to client edge node 21, which supplies said parameters to first serving edge node 11. In response, first serving edge node 11 and second serving edge node 12 exchange information (via a coupling as indicated by the very thick line like for example a signalling channel) comprising a request flowing from first serving edge node 11 to second serving edge node 12 and comprising other information flowing vice versa, as explained below, and in response to exchanged information, at least a part of said connection is set up. The fact that first serving edge node 11 can find second serving edge node 12 for said exchanging of information is either given by source node 20 or by client edge node 21 or can be calculated by first serving edge node 11 in dependence of said parameters. In case of given by source node 20 or by client edge node 21, usually source node 20 will have received this information earlier from second serving edge node 12 or from second client edge node 22.

According to a first possibility, said other information comprises one or more further connection parameters defining at least a part of said further connection, with said first serving edge node 11 calculating at least a part of said connection. In this case, first serving edge node 11 will for example delete those connection parameters which are already used for said further connection, dependently upon the conditions given by the diversity parameters, and use the remaining connection parameters for calculating path parameters for setting up at least a part of said connection as indicated by the thick dotted line (for example comprising one or more new tunneling connections in serving network 1).

According to a second possibility, said request will either comprise or be accompanied by or followed by one or more connection parameters defining at least a part of said connection, with said second serving edge node 12 now calculating at least a part of said connection. Said other information then comprises the calculated path parameters in response to which said first serving edge node 11 can set up at least a part of said connection as indicated by the thick dotted line (for example comprising one or more new tunneling connections in serving network 1).

Said connection parameters comprise for example a connection identification, a connection node, a connection link, a connection resource, a connection source and a connection destination, with said diversity parameters for example comprising a link diversity, a node diversity, a resource diversity, a shared risk diversity, a link non-diversity, a node non-diversity, a resource non-diversity and a shared risk non-diversity. Ususally a link is defined by two nodes.

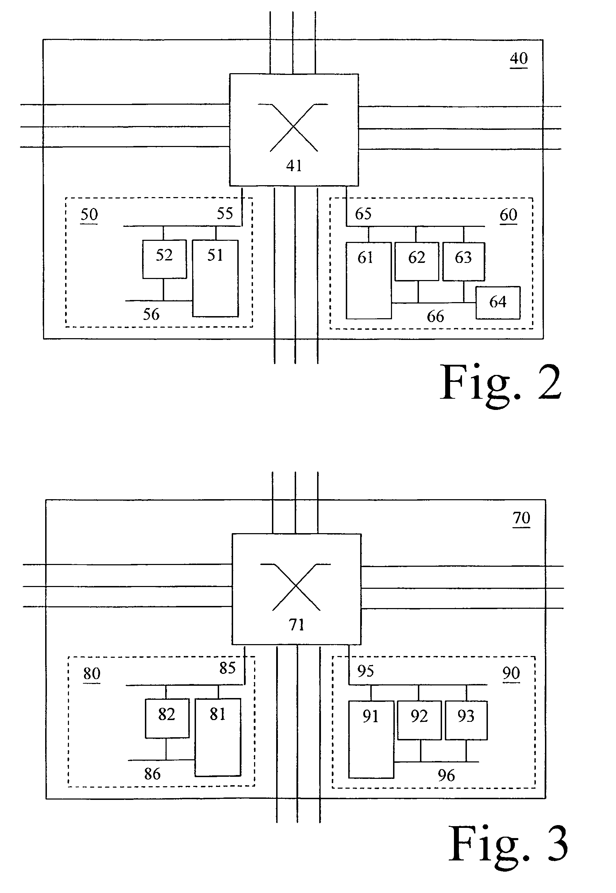

The serving edge node 40 according to the invention shown in Figure 2 for example corresponds with first serving edge node 11 or second serving edge node 12 and comprises a switch 41 (or a router, a bridge, a (de)mux etc.) coupled to a controller 50 for controlling said switch 41 and to an interface 60 for interfacing client network 2 and serving network 1 and/or for interfacing first serving edge node 11 and second serving edge node 12. Controller 50 comprises a processor 51 (and memory) coupled to an external bus 55 and to an internal bus 56 and comprises a generator/converter 52 for generating/converting addresses etc. and also coupled to external bus 55 and to internal bus 56. External bus 55 is further coupled to said switch 41. Interface 60 comprises a processor 61 (and memory) coupled to an external bus 65 and to an internal bus 66 and comprises a request-transceiver 62 for transceiving a request to/from another serving edge node and also coupled to external bus 65 and to internal bus 66 and comprises a connection-parameter-transceiver 63 for transceiving connection parameters to/from another serving edge node and also coupled to external bus 65 and to internal bus 66 and comprises a calculator 64 for calculating at least a part of said connection and also coupled to external bus 65 and to internal bus 66. External bus 65 is further coupled to said switch 41.

The client edge node 70 according to the invention shown in Figure 3 for example corresponds with first client edge node 21 or second client edge node 22 and comprises a switch 71 (or a router, a bridge, a (de)mux etc.) coupled to a controller 80 for controlling said switch 71 and to an interface 90 for interfacing client network 2 and serving network 1 and/or for interfacing client edge node 21,22 and client source node 20. Controller 80 comprises a processor 81 (and memory) coupled to an external bus 85 and to an internal bus 86 and comprises a generator/converter 82 for generating/converting addresses etc. and also coupled to external bus 85 and to internal bus 86. External bus 85 is further coupled to said switch 71. Interface 90 comprises a processor 91 (and memory) coupled to an external bus 95 and to an internal bus 96 and comprises a diversity-parameter-transceiver 92 for transceiving diversity parameters to/from another node and also coupled to external bus 95 and to internal bus 96 and comprises a connection-parameter-transceiver 93 for transceiving connection parameters to/from another node and also coupled to external bus 95 and to internal bus 96. External bus 95 is further coupled to said switch 71.

The functioning of serving edge node 40 and of client edge node 70 is in line with the procedures described for Figure 1, whereby it is to be understood that, per edge node, functions and units can be shifted from a controller to an interface and vice versa, and for a pair of serving or client edge nodes, functions and units can be shifted from one edge node to the other and vice versa, without departing from the scope of this invention.

The expression "for" in for example "for establishing" etc. does not exclude that other functions are performed as well, simultaneously or not. The expressions "X coupled to Y" and "a coupling between X and Y" and "coupling/couples X and Y" etc. do not exclude that an element Z is in between X and Y. The expressions "P comprises Q" and "P comprising Q" etc. do not exclude that an element R is comprises/included as well. The terms "a" and "an" do not exclude the possible presence of one or more pluralities.

The steps of receiving, exchanging and setting up do not exclude further steps, like for example, inter alia, the steps of letting information flow from A to B and of calculating at least a part of a connection and of transceiving a request to/from another serving edge node and of transceiving connection parameters to/from another serving edge node and of transceiving diversity parameters to/from another node and of transceiving connection parameters to/from another node etc.

The invention is based upon an insight, inter alia, that, risks and consequences from failures can be further reduced by introducing diversities in connections using different serving edge nodes, and is based upon a basic idea, inter alia, that these different serving edge nodes need to exchange information before the diverse connection can be set up.

The invention solves the problem, inter alia, of providing a method which is not limited to establishing diverse connections via the same serving edge node, and is advantageous, inter alia, in that risks and consequences from failures are further reduced.

## Claims

1. Method for establishing a connection via a first serving edge node (11) of a serving network (1) for a communication between a client source node (20) and a client destination node (30) via a first client edge node (21) and the first serving edge node (11), which method comprises a step of the first serving edge node (11) receiving one or more diversity parameters from the client source node (20) via the first client edge node (21), the one or more diversity parameters defining one or more diversities between said connection and a further connection between the client source node (20) and the client destination node (30) via a second client edge node (22) and a second serving edge node (12) of said serving network (1), **characterised in that** said first serving edge node (11) and said second serving edge node (12) are different serving edge nodes (11,12), which method comprises the steps of, in response to the first serving edge node (11) having received the one or more diversity parameters, exchanging information between said serving edge nodes (11,12) and of, in response to exchanged information, setting up at least a part of said connection for the communication.

2. Method according to claim 1, **characterised in that** said first serving edge node (11) is coupled via the first client edge node (21) to the client source node (20) in a client network (2), and which second serving edge node (12) is coupled via the second client edge node (22) to said client source node (20) in said client network (2), with said first client edge node (21) and said second client edge node (22) being different client edge nodes (21,22) situated in said client network (2) in a dual-homed or multi-homed situation.

3. Method according to claim 1 or 2, **characterised in that** said exchanged information comprises a request flowing from the first serving edge node (11) to the second serving edge node (12), with at least a part of each connection being defined by one or more connection parameters.

4. Method according to claim 3, **characterised in that** said exchanged information comprises one or more further connection parameters defining at least a part of said further connection and flowing from the second serving edge node (12) to the first serving edge node (11), with said first serving edge node (11) calculating at least a part of said connection for said setting up of at least the part of said connection.

5. Method according to claim 3, **characterised in that** said exchanged information comprises one or more connection parameters defining at least a part of said connection and flowing from the first serving edge node (11) to the second serving edge node (12), with said second serving edge node (12) calculating at least a part of said connection, said exchanged information further comprising calculated path parameters flowing from the second serving edge node (12) to the first serving edge node (11) in response to which said first serving edge node (11) sets up at least the part of said connection.

6. Method according to claim 4 or 5, **characterised in that** a connection parameter comprises at least one of a connection identification, a connection node, a connection link, a connection resource, a connection source and a connection destination, with a diversity parameter comprising at least one of a link diversity, a node diversity, a resource diversity, a shared risk diversity, a link non-diversity, a node non-diversity, a resource non-diversity and a shared risk non-diversity.

## Patentansprüche

1. Verfahren zum Aufbau einer Verbindung über einen ersten Dienst-Zugangsknoten (11) eines Dienst-Netzwerks (1) für eine Kommunikation zwischen einem Client-Quellknoten (20) und einem Client-Zielknoten (30) über einen ersten Client-Zugangsknoten (21) und den ersten Dienst-Zugangsknoten (11), wobei das Verfahren einen Schritt des ersten Dienst-Zugangsknotens (11) enthält, einen oder mehrere Diversitäts-Parameter vom Client-Quellknoten (20) über den ersten Client-Zugangsknoten (21) zu empfangen, wobei der eine oder die mehreren Diversitäts-Parameter eine oder mehrere Diversitäten zwischen der Verbindung und einer weiteren Verbindung zwischen dem Client-Quellknoten (20) und dem Client-Zielknoten (30) über einen zweiten Client-Zugangsknoten (22) und einen zweiten Dienst-Zugangsknoten (12) des Dienst-Netzwerks (1) definieren, **dadurch gekennzeichnet, dass** der erste Dienst-Zugangsknoten (11) und der zweite Dienst-Zugangsknoten (12) verschiedene Dienst-Zugangsknoten (11,12) sind, wobei das Verfahren den Schritt umfasst, als Reaktion darauf, dass der erste Dienst-Zugangsknoten (11) den einen oder die mehreren Diversitäts-Parameter empfangen hat, Informationen zwischen den Dienst-Zugangsknoten (11,12) auszutauschen und als Reaktion auf die ausgetauschte Information mindestens einen Teil der Verbindung für die Kommunikation aufzubauen.

2. Verfahren gemäß Anspruch 1, **dadurch gekennzeichnet, dass** der erste Dienst-Zugangsknoten (11) über den ersten Client-Zugangsknoten (21) mit dem Client-Quellknoten (20) in einem Client-Netzwerk (2) gekoppelt ist, und dessen zweiter Dienst-Zugangsknoten (12) über den zweiten Client-Zugangsknoten (22) mit dem Client-Quellknoten (20) in dem Client-Netzwerk (2) gekoppelt ist, wobei der erste Client-Zugangsknoten (21) und der zweite Client-Zugangsknoten (22) verschiedene Client-Zugangsknoten (21,22) sind, die sich in dem Client-Netzwerk (2) in einer Dual-Homed- oder Multi-Homed-Situation befinden.

3. Verfahren gemäß Anspruch 1 oder 2, **dadurch gekennzeichnet, dass** die ausgetauschte Information eine Anforderung umfasst, die vom ersten Dienst-Zugangsknoten (11) zum zweiten Dienst-Zugangsknoten (12) fließt, wobei mindestens ein Teil jeder Verbindung durch einen oder mehrere Verbindungs-Parameter definiert ist.

4. Verfahren gemäß Anspruch 3, **dadurch gekennzeichnet, dass** die ausgetauschte Information einen oder mehrere weitere Verbindungs-Parameter enthält, die mindestens einen Teil der weiteren Verbindung definieren, und vom zweiten Dienst-Zugangsknoten (12) zum ersten Dienst-Zugangsknoten (11) fließt, wobei der erste Dienst-Zugangsknoten (11) mindestens einen Teil der Verbindung berechnet, um mindestens einen Teil der Verbindung aufzubauen.

5. Verfahren gemäß Anspruch 3, **dadurch gekennzeichnet, dass** die ausgetauschte Information einen oder mehrere Verbindungs-Parameter enthält, die mindestens einen Teil der Verbindung definieren, und vom ersten Dienst-Zugangsknoten (11) zum zweiten Dienst-Zugangsknoten (12) fließt, wobei der zweite Dienst-Zugangsknoten (12) mindestens einen Teil der Verbindung berechnet, wobei die ausgetauschte Information weiterhin berechnete Pfad-Parameter enthält, die vom zweiten Dienst-Zugangsknoten (12) zu ersten Dienst-Zugangsknoten (11) fließen, wobei als Reaktion darauf der erste Dienst-Zugangsknoten (11) mindestens einen Teil der Verbindung aufbaut.

6. Verfahren gemäß Anspruch 4 oder 5, **dadurch gekennzeichnet, dass** ein Verbindungs-Parameter mindestens eines aus einer Verbindungs-Kennung, einem Verbindungs-Knoten, einer Verbindungs-Leitung, einer Verbindungs-Ressource, einer Verbindungs-Quelle und einem Verbindungs-Ziel enthält, wobei ein Diversitäts-Parameter mindestens eines aus einer Verbindungs-Diversität, einer Knoten-Diversität, einer Ressourcen-Diversität, einer Shared-Risk-Diversität, einer Verbindungs-Nicht-Diversität, einer Knoten-Nicht-Diversität, einer Ressourcen-Nicht-Diversität und einer Shared-Risk-Nicht-Diversität umfasst.

## Revendications

1. Procédé pour établir une connexion par le biais d'un premier noeud d'accès serveur (11) d'un réseau serveur (1) pour une communication entre un noeud d'origine client (20) et un noeud de destination client (30) par le biais d'un premier noeud d'accès client (21) et le premier noeud d'accès serveur (11), lequel procédé comprend une étape du premier noeud d'accès serveur (11) recevant un ou plusieurs paramètres de diversité à partir du noeud d'origine client (20) par le biais du premier noeud d'accès client (21), le ou les paramètres de diversité définissant une ou plusieurs diversités entre ladite connexion et une connexion supplémentaire entre le noeud d'origine client (20) et le noeud de destination client (30) par le biais d'un deuxième noeud d'accès client (22) et un deuxième noeud d'accès serveur (12) dudit réseau serveur (1), **caractérisé en ce que** ledit premier noeud d'accès serveur (11) et ledit deuxième noeud d'accès serveur (12) sont différents noeuds d'accès serveurs (11, 12), lequel procédé comprend les étapes consistant à, en réponse au premier noeud d'accès serveur (11) ayant reçu le ou les paramètres de diversité, échanger des informations entre lesdits noeuds d'accès serveurs (11, 12) et consistant à, en réponse aux informations échangées, mettre en place au moins une partie de ladite connexion pour la communication.

2. Procédé selon la revendication 1, **caractérisé en ce que** ledit premier noeud d'accès serveur (11) est couplé par le biais du premier noeud d'accès client (21) au noeud d'origine client (20) dans un réseau client (2), et **en ce que** le deuxième noeud d'accès serveur (12) est couplé par le biais du deuxième noeud d'accès client (22) au dit noeud d'origine client (20) dans ledit réseau client (2), ledit premier noeud d'accès client (21) et ledit deuxième noeud d'accès client (22) étant différents noeuds d'accès clients (21, 22) situés dans ledit réseau client (2) dans une situation de rattachement double ou de rattachement multiple.

3. Procédé selon la revendication 1 ou 2, **caractérisé en ce que** lesdites informations échangées comprennent une demande allant du premier noeud d'accès serveur (11) au deuxième noeud d'accès serveur (12), au moins une partie de chaque connexion étant définie par un ou plusieurs paramètres de connexion.

4. Procédé selon la revendication 3, **caractérisé en ce que** lesdites informations échangées comprennent un ou plusieurs paramètres de connexion supplémentaires définissant au moins une partie de ladite connexion supplémentaire et allant du deuxième noeud d'accès serveur (12) au premier noeud d'accès serveur (11), ledit premier noeud d'accès serveur (11) calculant au moins une partie de ladite connexion pour ladite mise en place d'au moins la partie de ladite connexion.

5. Procédé selon la revendication 3, **caractérisé en ce que** lesdites informations échangées comprennent un ou plusieurs paramètres de connexion définissant au moins une partie de ladite connexion et allant du premier noeud d'accès serveur (11) au deuxième noeud d'accès serveur (12), ledit deuxième noeud d'accès serveur (12) calculant au moins une partie de ladite connexion, lesdites informations échangées comprenant en outre des paramètres de chemin calculés allant du deuxième noeud d'accès serveur (12) au premier noeud d'accès serveur (11), en réponse à quoi ledit premier noeud d'accès serveur (11) met en place au moins la partie de ladite connexion.

6. Procédé selon la revendication 4 ou 5, **caractérisé en ce qu'**un paramètre de connexion comprend au moins un élément parmi une identification de connexion, un noeud de connexion, une liaison de connexion, une ressource de connexion, une source de connexion et une destination de connexion, un paramètre de diversité comprenant au moins un élément parmi une diversité de liaison diversité, une diversité de noeud, une diversité de ressource, une diversité de risque partagé, une non-diversité de liaison, une non-diversité de noeud, une non-diversité de ressource et une non-diversité de risque partagé.
